# EUROPÄISCHE PATENTSCHRIFT

(11) **EP 0 931 685 B1**
(45) Veröffentlichungstag und Bekanntmachung des Hinweises auf die Patenterteilung: **19.09.2001**
(21) Anmeldenummer: 98124153.2
(22) Anmeldetag: 19.12.1998
(51) Int. Cl.: B60K 15/04

(54) **Verriegelungsvorrichtung für eine einem Tankeinfüllstutzen zugeordnete Verschlussklappe**
Locking device for a closing flap of a tank filler pipe
Dispositif de verrouillage pour un volet de fermeture d'un conduit de remplissage de réservoir

(30) Priorität: 23.01.1998 DE 19802592
(43) Veröffentlichungstag der Anmeldung: 28.07.1999
(73) Patentinhaber: Volkswagen Aktiengesellschaft, 38436 Wolfsburg (DE)
(72) Erfinder: Krüger, Helmut, 38442 Wolfsburg (DE)

(56) Entgegenhaltungen:
- EP-B- 0 010 005
- CH-A- 186 424
- FR-A- 2 538 785
- US-A- 1 997 107
- US-A- 2 109 137
- US-A- 4 030 322

## Beschreibung

Die Erfindung betrifft eine Verriegelungsvorrichtung gemäß dem Oberbegriff des Patentanspruchs 1. In erster Linie ist dabei an eine Verriegelungsvorrichtung für einen Tankeinfüllstutzen eines Kraftfahrzeugs gedacht, jedoch läßt sich die Erfindung auch in anderen Fällen mit Vorteil einsetzen.

Bei der Verriegelungsvorrichtung nach der gattungbildenden FR-A-2538785 hintergreift die geschlossene Verschlußklappe ein Riegel, der durch eine Druckfeder im Sinne der Freigabe der Verschlußklappe vorgespannt ist und im Sinne des Verriegelns der Klappe durch einen Nocken an einem Schließzylinder eines Schlosses für die Tankklappe in seiner die Verschlußklappe hintergreifenden Stellung arretiert wird. Die aufeinanderliegenden Flächen von Verschlußklappe und Riegel verlaufen parallel zur Bewegungsrichtung des Riegels, der allerdings eine abgerundete Vorderkante aufweist. Die ebene Ausbildung der aufeinanderliegenden Flächen von Verschlußklappe und Riegel parallel zur Bewegungsrichtung des Riegels und damit parallel zu seiner Längsachse hat zur Folge, daß Toleranzen, seien es fertigungsbedingte oder im Lauf längerer Betriebszeiten auftretende, die Einfluß auf die Dichtheit des Abschlusses durch die Verschlußklappe haben können, keine Berücksichtigung finden.

Der Erfindung liegt die Aufgabe zugrunde, für Anordnungen der beschriebenen Art, d.h. mit in den Einfüllstutzen hineinschwenkbar gelagerter Verschlußklappe, eine einfache Verriegelungsvorrichtung zu schaffen, die die erforderliche Dichtheit auch über lange Betriebszeiten toleranzunabhängig sicherstellt.

Die erfindungsgemäße Lösung dieser Aufgabe besteht in einer gattungsgemäßen Verriegelungsvorrichtung mit den kennzeichnenden Merkmalen des Hauptanspruchs, vorteilhafte Ausgestaltungen der Erfindung beschreiben die Unteransprüche.

In vorteilhafter Weise vermeidet die Erfindung also - abgesehen von der Anschlagfläche-Eingriffe in die Verschlußklappe selbst, wodurch diese hinsichtlich ihrer Bauform und insbesondere hinsichtlich ihrer Größe beeinflußt werden könnte. Da der Verriegelungsstift den Einfüllstutzen bzw. einen Rohrkörper radial durchdringt, ist er zum Angriff von Kraftübertragungselementen, wie Bowdenzügen, oder zum mehr oder minder direkten Angriff von Antriebsmotoren leicht zugänglich. Er ermöglicht auch die relativ schwache Auslegung der der Verschlußklappe zugeordneten Schließfeder, da er zusammen mit der Wahl des Winkels von Anschlagfläche und Anschlagbereich leicht so ausgelegt werden kann, daß er den erforderlichen Dichtdruck zwischen der Verschlußklappe einerseits und einer Auflage für diese, zwischen denen sich verständlicherweise eine übliche Dichtung befindet, sicherstellt. Dabei unterstützt die die Klappe dauernd belastende Schließfeder ihrerseits die vom Verriegelungsstift erzeugten Dichtkräfte auch bei betriebsbedingten geringen Formveränderungen der Fahrzeugkarosserie im Falle eines Kraftfahrzeugs.

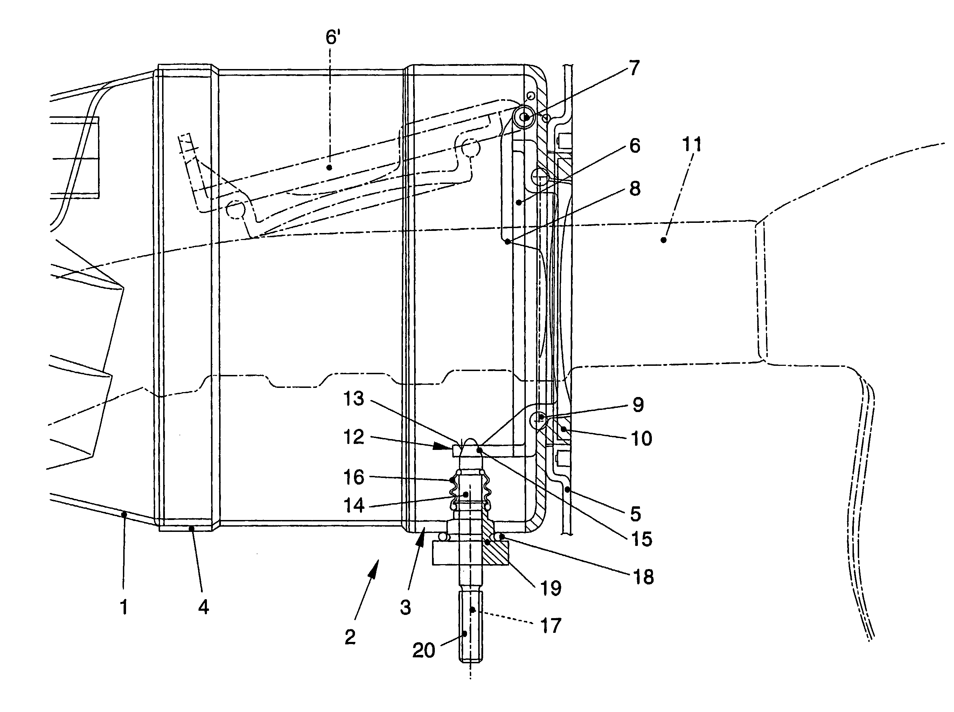

Ein Ausführungsbeispiel der Erfindung wird im folgenden anhand der Zeichnung erläutert, die einen Längsschnitt durch den hier interessierenden Bereich eines Einfüllstutzens zu einem Kraftfahrzeugtank wiedergibt.

Der eigentliche Einfüllstutzen ist bei 1 angedeutet. In diesem Ausführungsbeispiel sind alle Bestandteile des Verschlusses und der Verriegelung für den Einfüllstutzen 1 zu einem Modul 2 zusammengefaßt, der als Vormontageeinheit angeliefert werden kann. Er enthält als wesentlichen Bestandteil den Rohrkörper 3, der im Bereich seines in der Zeichnung linken Endes, d.h. bei 4, zur dichten Verbindung mit dem eigentlichen Einfüllstutzen 1 eingerichtet ist, während sein in der Zeichnung rechter Endbereich im eingebauten Zustand eine Ausnehmung im Karosserieaußenblech 5 durchsetzt und dort befestigt ist. In seinem Inneren ist die Verschlußklappe 6 um die Schwenkachse 7 schwenkbar gehalten, die sich an einem Randbereich der Klappe 6 befindet. Die Verschlußklappe 6, die mit ihrer in der Zeichnung nach rechts weisenden Außenseite einen Bestandteil der Karosserie bildet, steht ständig unter der Wirkung der Druckfeder 8, die die Klappe 6 in ihre mit ausgezogenen Linien gezeichnete Schließlage zu schwenken sucht, in der sich die Klappe 6 über die umlaufende Dichtung 9 an dem Ringbereich 10 des Rohrkörpers 3 dichtend abstützt. Die Dichtung 9 ist vor beschädigenden Berührungen der Zapfpistole geschützt angeordnet.

Mittels der bei 11 angedeuteten Zapfpistole kann - nach noch zu beschreibender Entriegelung - die Verschlußklappe 6 aus ihrer Schließlage in ihre mit strichpunktierten Linien bei 6' gezeichnete Öffnungslage geschwenkt werden, so daß das Betanken des Fahrzeugs erfolgen kann.

Dem der Schwenkachse 7 benachbarten Randbereich gegenüberliegend ist die Verschlußklappe 6 mit dem örtlichen kragenartigen, in das Innere des Einfüllstutzens 1 weisenden Fortsatz 12 versehen, der mit einer konusförmigen Öffnung 13 ausgerüstet ist; der Konuswinkel weist radial nach außen, d.h. die Öffnung 13 weist in diese Richtung, so daß zur Verriegelung der Verriegelungsstift 14 mit seinem konusförmigen Ende 15 einfallen kann. Dem Verriegelungsstift 14 ist der elastische Faltenbalg 16 zugeordnet, der einen gasdichten Abschluß des Innenraums des Moduls 2 sicherstellt; der Verriegelungsstift 14 ist im übrigen längsverschiebbar, d.h. in Richtung seiner Achse 17 verschiebbar, von der mittels der Dichtung 18 dicht in den Rohrkörper 3 eingesetzten Durchführung 19 aufgenommen.

Das Gewindeende 20 des Verriegelungsstifts 14 kann zum Angriff eines Bowdenzugs oder eines anderen Kraftübertragungsglieds dienen, das zu einem von Hand betätigbaren Hebel im Innern des Fahrzeugs führen kann; an dem Gewindeende 20 oder einem anders ausgeführten Endbereich des Verriegelungsstifts 14 kann aber auch direkt oder indirekt ein Antriebsmotor angreifen. Dieser kann auf einen Befehl beispielsweise dann den Verriegelungsstift 14 in seine radial außerhalb des Schwenkbereichs der Verschlußklappe 6 liegende Freigabestellung ziehen, wenn eine Türzentralverriegelung des Fahrzeugs aufgehoben und die Zündung desselben ausgeschaltet ist.

Wie auch die Beschreibung des Ausführungsbeispiels zeigt, ist mit der Erfindung eine gattungsgemäße Verriegelungsvorrichtung geschaffen, die bei Verschlußklappenkonstruktionen unterschiedlicher Ausbildung Einsatz finden kann, die wenig toleranzempfindlich ist und die den weiteren Vorteil bietet, daß Manipulationen an der Verriegelungsvorrichtung ohne Beschädigung der Karosserie praktisch unmöglich sind.

Während in dem gezeichneten Ausführungsbeispiel Anschlagfläche 13 und Anschlagbereich 15 durch Konen gebildet sind, kann es in vielen Fällen genügen, keine rotationssymmetrischen Flächen hierfür vorzusehen, sondern nur reine Druckflächen rechts der Längsachse 17 des Verriegelungsstifts 14. Derartige, also nicht bezüglich der Achse 17 rotationssymmetrische Anschläge können insbesondere dann von Vorteil sein, wenn durch Fertigungstoleranzen die Gefahr besteht, daß die Achse 17 in der Zeichnung etwas nach links verlagert ist.

## Patentansprüche

1. Verriegelungsvorrichtung für eine einem Tankeinfüllstutzen (1) zugeordnete Verschlußklappe (6), die zur Freigabe des Stutzens (1) gegen die Kraft einer an ihr angreifenden Schließfeder (8) um eine an einem Klappenrandbereich vorgesehene Schwenkachse (7) in den Stutzen (1) hineinschwenkbar ist und in einem dem Klappenrandbereich im wesentlichen diametral gegenüberliegenden Bereich eine Anschlagfläche (13) trägt für einen Verriegelungsstift (14), der quer zur Längsachse des Stutzens (1) zwischen einer Verriegelungsstellung, in der er die in Verriegelungsstellung befindliche Verschlußklappe (6) mit einem Anschlagbereich (15) an der Anschlagfläche (13) hintergreift, und einer Freigabestellung verschiebbar ist, in der er sich radial außerhalb des Schwenkbereichs der Verschlußklappe (6) befindet, **dadurch gekennzeichnet, daß** Anschlagfläche (13) und Anschlagbereich (15) zur Ausübung von Schließkräften auf die Verschlußklappe (6) mit gleichen Neigungen gegen die Längsachse (17) des Verriegelungsstiftes (14) ausgeführt sind.

2. Verriegelungsvorrichtung nach Anspruch 1, **dadurch gekennzeichnet, daß** Anschlagfläche (13) und Anschlagbereich (15) Bestandteile von Konusflächen sind.

3. Verriegelungsvorrichtung nach Anspruch 2, **dadurch gekennzeichnet, daß** die klappenseitige Konusfläche (13) in einen kragenartigen Ansatz (12) der Verschlußklappe (6) eingearbeitet ist.

4. Verriegelungsvorrichtung nach einem der Ansprüche 1 bis 3, **dadurch gekennzeichnet, daß** die Verschlußklappe (6), ein diese schwenkbar haltender, zum dichtenden Übergang in den eigentlichen Tankeinfüllstutzen (1) sowie zur Befestigung in einem Karosserieausschnitt (5) eingerichteter Rohrkörper (3) und der dichtend und verschiebbar in eine Ausnehmung in diesem eingesetzte Verriegelungsstift (14) einen Modul bilden.

5. Vorrichtung nach einem der Ansprüche 1 bis 4, **dadurch gekennzeichnet, daß** zur Abdichtung dem Verriegelungsstift (14) ein Faltenbalg (16) zugeordnet ist.

6. Verriegelungsvorrichtung nach einem der Ansprüche 1 bis 5, **dadurch gekennzeichnet, daß** der Verriegelungsstift (14) in seine Freigabestellung manuell bewegbar ist.

7. Verriegelungsvorrichtung nach einem der Ansprüche 1 bis 6, **dadurch gekennzeichnet, daß** der Verriegelungsstift (14) nur bei aufgehobener Türzentralverriegelung eines mit dem Tankeinfüllstutzen (1) ausgerüsteten Fahrzeugs und bei ausgeschalteter Zündung desselben in seine Freigabestellung manuell oder motorisch bewegbar ist.

## Claims

1. Locking device for a closing flap (6) allocated to a tank filler pipe (1), which, for the purpose of releasing the pipe (1) can be pivoted, against the force of a closing spring (8) acting upon it, into the pipe (1) about a pivot axis (7) provided on a flap edge region and, in a region substantially diametrically opposed to the flap edge region, has a stop surface (13) for a locking pin (14) which can be displaced in a transverse manner with respect to the longitudinal axis of the pipe (1) between a locking position, in which it engages behind the closing flap (6), located in the locking position, with a stop region (15) on the stop surface (13), and a release position, in which said locking pin is located radially outside the pivot region of the closing flap (6), **characterised in that** the stop surface (13) and stop region (15) for exertion of closing forces upon the closing flap (6) are formed with identical degrees of pitch with respect to the longitudinal axis (17) of the locking pin (14).

2. Locking device according to claim 1, **characterised in that** the stop surface (13) and stop region (15) are components of conical surfaces.

3. Locking device according to claim 2, **characterised in that** the flap-side conical surface (13) is incorporated into a collar-like projection (12) of the closing flap (6).

4. Locking device according to any one of claims 1 to 3, **characterised in that** the closing flap (6), a pipe body (3), which holds said closing flap in a pivotable manner and is arranged for the sealing transition to the actual tank filler pipe (1) and for attachment in a bodywork section (5), and the locking pin (14), which is inserted into a recess in said pipe body in a sealing and displaceable manner, form a module.

5. Device according to any one of claims 1 to 4, **characterised in that** an expansion bellows (16) is allocated to the locking pin (14) for sealing purposes.

6. Locking device according to any one of claims 1 to 5, **characterised in that** the locking pin (14) can be moved manually to its release position.

7. Locking device according to any one of claims 1 to 6, **characterised in that** the locking pin (14) can be moved manually or motor-driven to its release position only when the door central locking system of a vehicle equipped with the tank filler pipe (1) is deactivated and when the ignition of said vehicle is switched off.

## Revendications

1. Dispositif de verrouillage destiné à une trappe de fermeture (6) associée à une tubulure de remplissage (1) de réservoir, laquelle, pour la libération de la tubulure (1), peut être pivotée à l'intérieur de la tubulure (1) autour d'un axe de pivotement (7) prévu sur une zone de bord de la trappe en s'opposant à la force d'un ressort de fermeture (8) agissant sur elle, et qui porte dans une zone située pour l'essentiel diamétralement à l'opposé de la zone de bord de la trappe une surface de butée (13) pour une goupille de verrouillage (14), cette dernière pouvant être déplacée transversalement à l'axe longitudinal de la tubulure (1) entre une position de verrouillage, dans laquelle elle s'engage par une zone de butée (15) de la surface de butée (13) derrière la trappe de fermeture (6) se trouvant en position de verrouillage, et une position de libération dans laquelle elle est située radialement en dehors de la zone de pivotement de la trappe de fermeture (6), **caractérisé en ce que**, pour exercer des forces de fermeture sur la trappe de fermeture (6), la surface de butée (13) et la zone de butée (15) sont réalisées avec les mêmes inclinaisons par rapport à l'axe longitudinal (17) de la goupille de verrouillage (14).

2. Dispositif de verrouillage selon la revendication 1, **caractérisé en ce que** la surface de butée (13) et la zone de butée (15) sont des éléments constitutifs de surfaces coniques.

3. Dispositif de verrouillage selon la revendication 2, **caractérisé en ce que** la surface conique (13) située du côté de la trappe est intégrée dans un appendice (12) de type collet de la trappe de fermeture (6).

4. Dispositif de verrouillage selon l'une quelconque des revendications 1 à 3, **caractérisé en ce que** la trappe de fermeture (6), un corps tubulaire (3) retenant cette dernière de façon à pouvoir pivoter, qui est agencé pour la transition étanche dans la tubulure de remplissage (1) de réservoir proprement dite, ainsi que pour la fixation dans une découpe de carrosserie (5), et la goupille de verrouillage (14) insérée de façon étanche et de façon à pouvoir coulisser dans un évidement de celui-ci, constituent un module.

5. Dispositif selon l'une quelconque des revendications 1 à 4, **caractérisé en ce qu**'un soufflet (16) d'étanchéité est associé à la goupille de verrouillage (14).

6. Dispositif de verrouillage selon l'une quelconque des revendications 1 à 5, **caractérisé en ce que** la goupille de verrouillage (14) peut être déplacée manuellement dans sa position de libération.

7. Dispositif de verrouillage selon l'une quelconque des revendications 1 à 6, **caractérisé en ce que** la goupille de verrouillage (14) ne peut être déplacée manuellement ou par voie motorisée dans sa position de libération que lorsque le verrouillage centralisé des portes d'un véhicule équipé de la tubulure de remplissage (1) de réservoir est débloqué, et que le contact du véhicule est coupé.
